# EUROPEAN PATENT SPECIFICATION

(11) **EP 1 988 763 B1**
(45) Date of publication and mention of the grant of the patent: **02.12.2009**
(21) Application number: 07712805.6
(22) Date of filing: 28.02.2007
(51) Int. Cl.: A01G 27/00

(54) **A PLANT WATERING APPARATUS**
PFLANZENBEWÄSSERUNGSVORRICHTUNG
APPAREIL D'ARROSAGE DE PLANTES

(30) Priority: 28.02.2006 GB 0604027
(43) Date of publication of application: 12.11.2008
(73) Proprietor: Brown, John Herbert, Haverhill Suffolk CB9 8AR (GB); Elsey, Andrew John, Haverhill Suffolk CB9 8AR (GB)
(72) Inventor: KERBY, Haydn, James, Suffolk IP33 3AG (GB)
(74) Representative: ip21 Ltd
(86) International application number: PCT/GB2007/000688
(87) International publication number: WO 2007/099306

(56) References cited:
- US-A- 4 270 696
- US-A- 4 825 591

## Description

This invention relates to a plant watering apparatus and more particularly to the automatic watering of plant containers using valves activated by weight change in the planted medium within the container.

Known arrangements include a water container suspended by a spring device operatively coupled with a valve means which is actuated when the overall weight of the container, that is the total weight of the container and plant, reduces to a predetermined level to permit water flow to the container. The valve is then closed when the weight is restored to a predetermined value. Other known arrangements include capillary tubes to provide constant dripping so as to maintain an equilibrium but such systems are difficult to calibrate and suffer from blockages due to impurities in the water and calcification.

A disadvantage of these known arrangements is that an increase in the weight of the plant itself, such as that due to foliage growth, upsets the balance and has the effect of reducing or stopping the watering action as the valve means remains closed. These systems cannot therefore be used over extended periods without readjustment.

US-A-4 825 591 (HAN JOON H [US]) 2 May 989 (1989-05-02) discloses a watering device for plants that includes a plant container which is balanced on a vertical moving rod by a spring and a water reservoir tank is operatively associated with the plant container to provide a water supply when the container becomes lighter due to loss of water.

An object of this invention is to provide a method and apparatus for plant watering which functions automatically using the plant container weight for controlling water flow and which is substantially independent of weight increase due to foliage growth.

According to this invention there is provided a plant watering apparatus wherein a plant container is associated with valve means controlling the flow of water to the container according to a change in container weight, characterised by the provision of a plant foliage support member. In use a greater part of the weight of plant foliage from growth of plants in the container will thus be carried by the support member and does not contribute to the weight of the container over an extended period of time.

The plant foliage support member may comprise an apertured plate through which foliage from plants in the container may pass such that a greater part of the weight of the foliage is carried by the plate by which means the foliage and thus the plate will not contribute to the weight of the container and will thus not affect the control of the water flow.

In an embodiment the plant container, or a supporting member for such a container, is suspended and operatively associated with the valve means such that the valve is opened to permit water flow to the container as the container becomes lighter due to water loss. Conversely an increase in weight of the container tends to close the valve thus shutting off the water flow.

The plant support member is mounted or suspended independently of the container. Thus the weight and that of the foliage does not contribute to the overall weight of the container.

In one preferred embodiment the container is suspended from the plant foliage support member in a manner whereby relative displacement actuates the water control valve means which may be mounted on the container or on the support plate. In this case the plant foliage support is adapted to be supported or suspended from a fixed structure such as a wall or ceiling. The valve means may be fed with water through a pipe from a supply or may include a water container mounted on the support plate.

The container may be suspended from a rod operatively coupled with the valve located within a housing on the support plate. The container is preferably supported through spring means permitting displacement, relative to the plate, according to weight. The spring means may be an integral part of the valve.

The operative points of opening and closing of the valve may be adjustable and conveniently effected by adjustment of the valve position in relation to the container support rod.

This invention also provides a method of watering a plant in a container in which method a water flow valve controls flow of water to the container in response to a change in the weight of the container, the method including the step of supporting plant foliage such that the increasing weight thereof is not borne by the container.

In contrast to known devices the apparatus of this invention is not influenced to any great extent by the increasing weight of the plant foliage, which varies with growth. In this invention it is solely or predominantly only the weight change of the root ball and planting medium within a container which controls the watering operation.

This invention is further described and illustrated with reference to the following description and drawings showing an embodiment by way of an example. In the drawings:
- Figure 1: shows a side elevation of an apparatus according to this invention,
- Figure 1a: shows a plan view of the apparatus of Figure 1,
- Figure 2: shows an enlarged detail view of the valve assembly of Figure 1,
- Figure 3: shows a side elevation of a modified and second embodiment of this invention,
- Figure 4: shows in more detail the embodiment of Figure 3, and
- Figure 5: shows a side elevation of a modification of the embodiment shown in Figures 3 and 4.

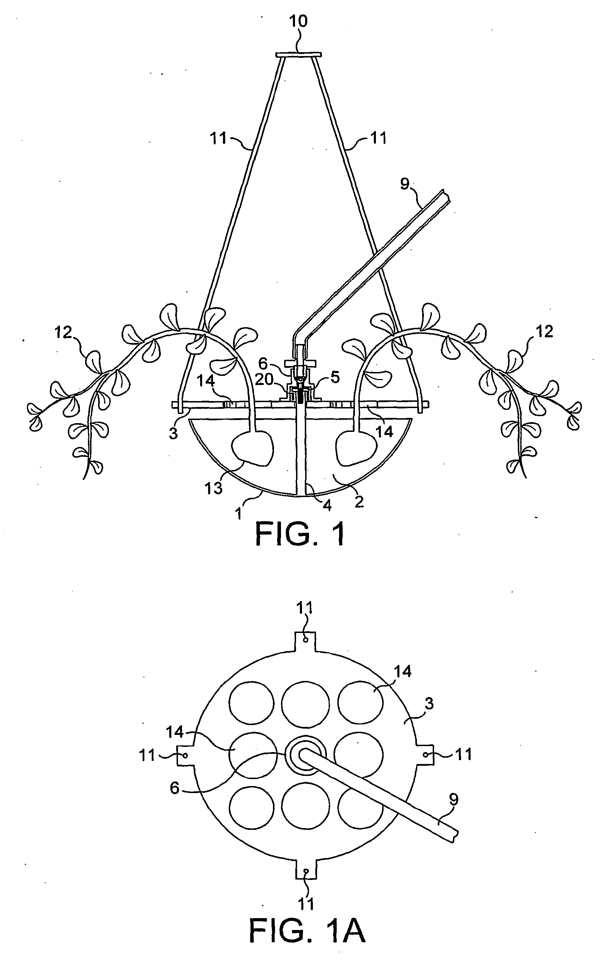

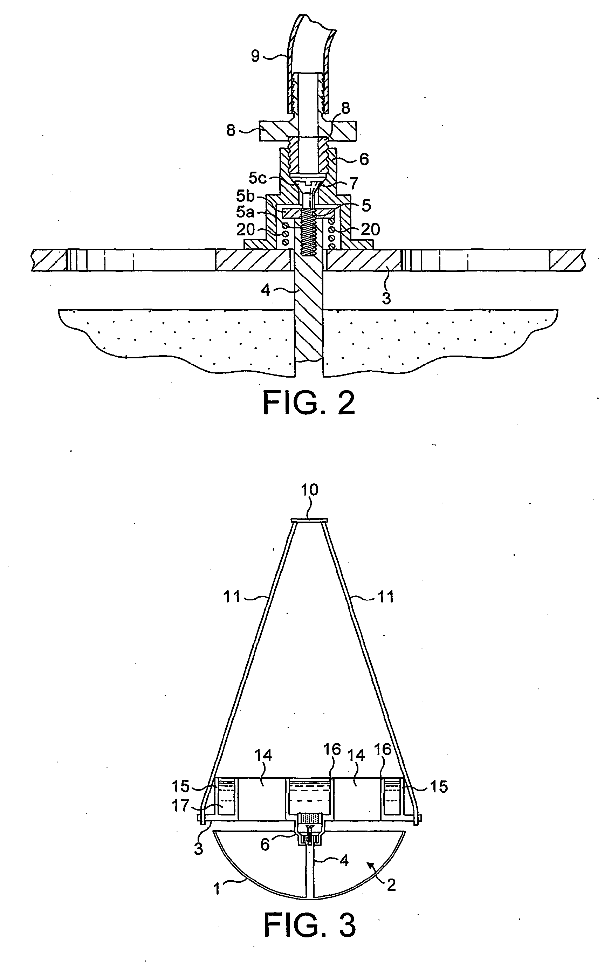

Referring to Figures 1, 1a and 2 of the drawings a container 1 is filled with a suitable growth medium such as a potting compost 2. The container 1 is suspended from a foliage support plate 3 by a bar 4 engaged and retained by a screw 5 (Fig. 2). A spring 20 is located between a threaded flange 5b located on the screw 5 and the plate 3 thus supporting the bar 4 against downward displacement. The screw 5 can be adjusted relative to the flange 5b by means of the threaded connection 5a which also connects the screw with the rod 4. The tapered head 5c of the screw 5 forms a valve which closes against a tapered valve seat 7 located in a valve body 6 which is rigidly attached to the plate 3. The flange 5b is adjusted on the screw 5 to provide for setting the valve closure point after a chosen quantity of water has been supplied to the container as determined by the weight. A hose union 8 provides for the attachment of a hose 9 to the valve body 6 and forms the means of supplying water from a container or from a source of supply.

The plate 3 is supported by a wall or ceiling bracket 10 by means of suspension rods, chains or cables 11.

In an alternative arrangement the suspension plate 3 can be supported on the rim of a container which then surrounds the freely suspended plant container 1.

In use plants 12 are added to the assembly through holes 14 in the plate 3 and the plant root ball 13 is embedded within the potting compost 2. When the potting compost contains a defined quantity of water, which may be the saturation point of the container, the spring 20 will be compressed under the added weight and, subject to correct adjustment of the screw 5 relative to the flange 5b, the valve assembly 5c, 6 and 7 will shut off the water feed. As the compost in the container dries out the weight will reduce and the valve will commence opening.

In this arrangement, and in accordance with this invention, the plant foliage is supported on the upper surface of the plate 3 and thus the bulk of the foliage weight increase is supported by the plate and does not contribute to the weight of the container 1 and planted medium.

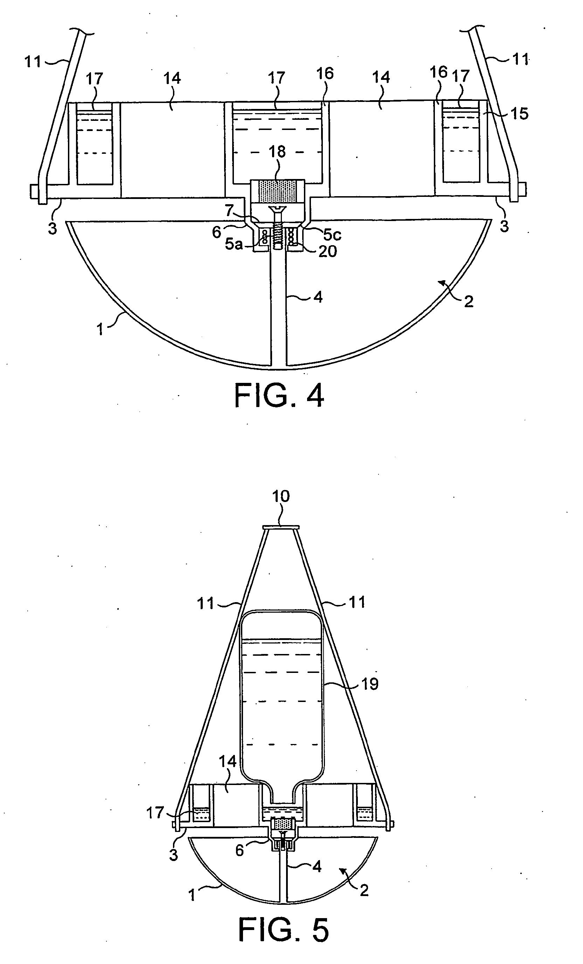

In a further development of this invention and as shown in Figures 3 and 4, the plate forms a water reservoir. In this arrangement the rim of the plate has a peripheral water containment wall 15 and each of the planting holes 14 also includes a peripheral water containment wall 16 forming a reservoir on top of the plate for a water supply 17. The valve arrangement operates in a similar way to that of the embodiment of Figure 1 but with the valve body 6 now located beneath the plate 3. A filter 18 is included in this arrangement to prevent particles entering the valve.

Figure 5 shows a further development of the embodiment shown in Figures 3 and 4 wherein an inverted bottle 19 provides for longer periods between replenishment of the reservoir. The water from the bottle will only flow into the reservoir 17 when the water level in the reservoir drops below the bottle opening. The bottle may be loosely attached to the reservoir or suspended from the wall or ceiling bracket 10 or the rods 11.

In summary a preferred version of plant watering apparatus has a container 1 filled with a suitable growth medium 2 and is attached to a foliage support plate 3 by a bar 4 operatively coupled with a spring loaded water control valve 6. Decreasing weight of the container opens the valve to feed water to the container 1. The plate 3 is supported by a wall or ceiling bracket 10 by means of suspension rods 11. Plants 12 are added through holes 14 in the plate 3 and the plant root ball 13 is embedded within the medium 2 with the plant foliage overlying the plate 3. When sufficient water is present in the container 1 the spring loaded valve 6 will be closed. As the compost in the container dries out the weight will reduce and the valve will commence opening. The foliage is supported by the plate 3 and foliage growth will not significantly add to the weight of the container and thus will not affect the operating point of the valve over extended periods of time.

## Claims

1. A plant watering apparatus wherein a plant container (1) is associated with valve means controlling the flow of water to the container (1) according to a change in container weight, **characterised by** the provision of a plant foliage support member (3) whereby in use a greater part of the weight of plant foliage is carried by the support member (3) and does not contribute to the weight of the container.

2. A plant watering apparatus according to claim 1, wherein the plant foliage support member comprises an apertured plate (3) through which foliage from plants (12) in the container (1) may pass such that a greater part of the weight of the foliage is carried by the plate (3) such that neither the foliage nor the plate (3) will contribute to the weight of the container (1).

3. A plant watering apparatus according to claim 1 or 2, wherein the plant container (1), or a supporting member (3) for such a container (1), is suspended and operatively associated with the valve means (6) such that the valve is opened to permit water flow to the container (1) as the container (1) becomes lighter due to water loss.

4. A plant watering apparatus according to claim 1 or 2 or 3, wherein the plant foliage support member (3) is mounted or suspended independently of the container (1).

5. A plant watering apparatus according to any preceding claim, wherein the container (1) is suspended from the plant foliage support member (3) in a manner whereby relative displacement actuates the water control valve means (6).

6. A plant watering apparatus according to any preceding claim, wherein the valve means (6) is mounted on the container (1) or on the plant foliage support member (3).

7. A plant watering apparatus according to any preceding claim, wherein the plant foliage support (3) is adapted to be supported or suspended from a fixed structure.

8. A plant watering apparatus according to any preceding claim, wherein the valve means (6) is fed with water through a pipe (9) from a supply or from a water container mounted on the plant foliage support member (3).

9. A plant watering apparatus according to any preceding claim, wherein the container (1) is suspended from a rod (4) operatively coupled with the valve means (6), located within a housing (1) on the plant foliage support member (3).

10. A plant watering apparatus according to any preceding claim, wherein the container (1) is supported through spring means permitting displacement, relative to the plant foliage support member (3), according to the container weight.

11. A plant watering apparatus according to any preceding claim, wherein the spring means is an integral part of the valve means (6).

12. A plant watering apparatus according to any preceding claim, wherein the operative points of opening and closing of the valve (6) are adjustable.

13. A method of watering a plant in a container in which method a water flow valve (6) controls flow of water to the container (1) in response to a change in the weight of the container (1), the method including the step of supporting plant foliage such that the increasing weight thereof is not borne by the container (1).

## Patentansprüche

1. Pflanzenbewässerungsvorrichtung, bei der ein Pflanzenbehälter (1) Ventilmitteln zugeordnet ist, die die Strömung von Wasser zu dem Behälter (1) entsprechend einer Änderung des Gewichts des Behälters regeln, **gekennzeichnet durch** die Bereitstellung eines Pflanzenblattwerkstützelements (3), **durch** das bei Gebrauch ein größerer Teil des Gewichts des Pflanzenblattwerks von dem Stützelement (3) getragen wird und nicht zu dem Gewicht des Behälters beiträgt.

2. Pflanzenbewässerungsvorrichtung nach Anspruch 1, wobei das Pflanzenblattwerkstützelement eine mit Öffnungen versehene Platte (3) umfasst, durch die Blattwerk von Pflanzen (12) in dem Behälter (1) hindurchgelangen kann, so dass ein größerer Teil des Gewichts des Blattwerks von der Platte (3) getragen wird und weder das Blattwerk noch die Platte (3) zu dem Gewicht des Behälters (1) beitragen.

3. Pflanzenbewässerungsvorrichtung nach Anspruch 1 oder 2, wobei der Pflanzenbehälter (1) oder ein Stützelement (3) für einen derartigen Behälter (1) aufgehängt und dem Ventilmittel (6) betriebsfähig zugeordnet ist, so dass das Ventil geöffnet wird, um eine Wasserströmung zu dem Behälter (1) zu ermöglichen, wenn der Behälter (1) aufgrund von Wasserverlust leichter wird.

4. Pflanzenbewässerungsvorrichtung nach Anspruch 1, 2 oder 3, wobei das Pflanzenblattwerkstützelement (3) unabhängig von dem Behälter (1) angebracht oder aufgehängt ist.

5. Pflanzenbewässerungsvorrichtung nach einem der vorhergehenden Ansprüche, wobei der Behälter (1) so an dem Pflanzenblattwerkstützelement (3) aufgehängt ist, dass das Wasserregelventilmittel (6) durch eine relative Bewegung betätigt wird.

6. Pflanzenbewässerungsvorrichtung nach einem der vorhergehenden Ansprüche, wobei das Ventilmittel (6) an dem Behälter (1) oder dem Pflanzenblattwerkstützelement (3) angebracht ist.

7. Pflanzenbewässerungsvorrichtung nach einem der vorhergehenden Ansprüche, wobei die Pflanzenblattwerkstütze (3) dafür ausgelegt ist, von einer festen Konstruktion gestützt zu werden oder davon herabzuhängen.

8. Pflanzenbewässerungsvorrichtung nach einem der vorhergehenden Ansprüche, wobei das Ventilmittel (6) durch ein Rohr (9) von einem Wasseranschluss oder von einem Wasserbehälter, der an dem Pflanzenblattwerkstützelement (3) angebracht ist, mit Wasser versorgt wird.

9. Pflanzenbewässerungsvorrichtung nach einem der vorhergehenden Ansprüche, wobei der Behälter (1) an einer Stange (4) hängt, die betriebsfähig mit dem Ventilmittel (6), das in einem Gehäuse (1) des Pflanzenblattwerkstützelements (3) angeordnet ist, gekoppelt ist.

10. Pflanzenbewässerungsvorrichtung nach einem der vorhergehenden Ansprüche, wobei der Behälter (1) mittels eines Federmittels gestützt wird, das entsprechend dem Gewicht des Behälters im Verhältnis zu dem Pflanzenblattwerkstützelement (3) eine Bewegung ermöglicht.

11. Pflanzenbewässerungsvorrichtung nach einem der vorhergehenden Ansprüche, wobei das Federmittel ein einstückiges Teil des Ventilmittels (6) ist.

12. Pflanzenbewässerungsvorrichtung nach einem der vorhergehenden Ansprüche, wobei die betriebsfähigen Punkte zum Öffnen und Schließen des Ventils (6) einstellbar sind.

13. Verfahren zur Bewässerung einer Pflanze in einem Behälter, wobei bei dem Verfahren ein Wasserströmungsventil (6) als Reaktion auf eine Änderung des Gewichts des Behälters (1) die Strömung von Wasser zu dem Behälter (1) regelt, wobei das Verfahren den Schritt des Stützens von Pflanzenblattwerk umfasst, so dass das zunehmende Gewicht desselben nicht von dem Behälter (1) getragen wird.

## Revendications

1. Un appareil d'arrosage de plante où un conteneur de plante (1) est associé à un moyen de valve contrôlant le débit d'eau vers le conteneur (1) en fonction d'un changement dans le poids du conteneur, **caractérisé par** la fourniture d'un membre de soutien de feuillage de plante (3) grâce à quoi lors de l'utilisation une plus grande partie du poids du feuillage de plante est portée par le membre de soutien (3) et ne contribue pas au poids du conteneur.

2. Un appareil d'arrosage de plante selon la revendication 1, où le membre de soutien de feuillage de plante comporte une plaque trouée (3) à travers laquelle un feuillage de plantes (12) dans le conteneur (1) peut passer de telle sorte qu'une plus grande partie du poids du feuillage soit portée par la plaque (3) de telle sorte que ni le feuillage ni la plaque (3) ne contribuera au poids du conteneur (1).

3. Un appareil d'arrosage de plante selon la revendication 1 ou 2, où le conteneur de plante (1), ou un membre de soutien (3) pour un conteneur de la sorte (1), est suspendu et associé de façon opérante au moyen de valve (6) de telle sorte que la valve soit ouverte pour permettre un débit d'eau vers le conteneur (1) à mesure que le conteneur (1) devient plus léger en raison de la perte d'eau.

4. Un appareil d'arrosage de plante selon la revendication 1 ou 2 ou 3, où le membre de soutien de feuillage de plante (3) est monté ou suspendu indépendamment du conteneur (1).

5. Un appareil d'arrosage de plante selon n'importe quelle revendication précédente, où le conteneur (1) est suspendu au membre de soutien de feuillage de plante (3) d'une manière telle qu'un déplacement relatif actionne le moyen de valve de contrôle d'eau (6).

6. Un appareil d'arrosage de plante selon n'importe quelle revendication précédente, où le moyen de valve (6) est monté sur le conteneur (1) ou sur le membre de soutien de feuillage de plante (3).

7. Un appareil d'arrosage de plante selon n'importe quelle revendication précédente, où le soutien de feuillage de plante (3) est adapté pour être soutenu à partir d'une ou suspendu à une structure fixe.

8. Un appareil d'arrosage de plante selon n'importe quelle revendication précédente, où le moyen de valve (6) est alimenté avec de l'eau à travers un tube (9) à partir d'une source ou à partir d'un conteneur d'eau monté sur le membre de soutien de feuillage de plante (3).

9. Un appareil d'arrosage de plante selon n'importe quelle revendication précédente, où le conteneur (1) est suspendu par une tige (4) couplée de façon opérante au moyen de valve (6) située à l'intérieur d'un logement (1) sur le membre de soutien de feuillage de plante (3).

10. Un appareil d'arrosage de plante selon n'importe quelle revendication précédente, où le conteneur (1) est soutenu par le biais d'un moyen de ressort permettant un déplacement, relativement au membre de soutien de feuillage de plante (3), en fonction du poids du conteneur.

11. Un appareil d'arrosage de plante selon n'importe quelle revendication précédente, où le moyen de ressort fait partie intégrante du moyen de valve (6).

12. Un appareil d'arrosage de plante selon n'importe quelle revendication précédente, où les points opérants d'ouverture et de fermeture de la valve (6) sont réglables.

13. Un procédé pour arroser une plante dans un conteneur dans lequel procédé une valve de débit d'eau (6) contrôle le débit de l'eau vers le conteneur (1) en réponse à un changement dans le poids du conteneur (1), le procédé comprenant l'étape consistant à soutenir un feuillage de plante de telle sorte que le poids croissant de ce dernier ne soit pas supporté par le conteneur (1).
